## Europäisches Patentamt

## European Patent Office

## Office européen des brevets

(11) Veröffentlichungsnummer: **0 128 303**
**A1**

# EUROPÄISCHE PATENTANMELDUNG

(21) Anmeldenummer: 84104185.8

(22) Anmeldetag: 13.04.84

(51) Int. Cl.³: **B 60 G 13/00**

(30) Priorität: 07.05.83 DE 3316812

(43) Veröffentlichungstag der Anmeldung: 19.12.84
Patentblatt 84/51

(84) Benannte Vertragsstaaten: **BE CH DE FR GB IT LI NL SE**

(71) Anmelder: **Iveco Magirus Aktiengesellschaft,
Schillerstrasse 2, D-7900 Ulm/Donau (DE)**

(72) Erfinder: **Rieck, Gerhard, Dipl.-Ing., Oderstrasse 8,
D-7910 Neu-Ulm (DE)**

(74) Vertreter: **Socha, Peter, Iveco - Magirus
Aktiengesellschaft Postfach 2740 Schillerstrasse 2,
D-7900 Ulm (DE)**

(54) **Dämpferbeinachse für Kraftfahrzeuge.**

(57) Eine Dämpferbeinachse für Nutzfahrzeuge umfaßt einen unteren, schwenkbar am Fahrzeugaufbau angebrachten Dreieckslenker (6), zumindest ein zwischen Dreieckslenker und Fahrzeugaufbau (5) angeordnetes, im Bereich seines oberen Endes (3) gelenkig mit diesem verbundenes Dämpferbein (1), eine von den Dämpferbeinen unabhängige, zwischen Dreieckslenker und Fahrzeugaufbau angeordnete Radfeder sowie einen mit den Dämpferbeinen fest verbundenen Radträger. Insbesondere werden die Radführungskräfte auf zwei oder mehr Dämpferbeine pro Rad aufgeteilt. Durch geschickte Kombination gleicher oder unterschiedlich großer Elemente oder durch Verwendung von nur einem Dämpferelement pro Rad kann mit wenigen Dämpfervarianten eine komplette Baureihe von Vorderachsen dargestellt werden, und zwar für alle Gewichtsklassen von Nutzfahrzeugen.

Dämpferbeinachse für Kraftfahrzeuge
───────────────────────────────────

Die Erfindung betrifft eine Dämpferbeinachse für Kraftfahrzeuge gemäß Oberbegriff des Anspruchs 1.

Aus der DE-OS 30 12 873 ist eine gattungsgemäße Dämpferbeinachse bekannt, die für die Vorderachse von Personenkraftwagen vorgesehen ist. Für ein gutes Dämpfungs- und
Federungsverhalten eines PKW-Vorderrads ist die bekannte
Konstruktion vergleichsweise aufwendig getroffen: Führungs-
und Federungselemente sind getrennt voneinander, das Führungselement übernimmt gleichzeitig die Dämpferfunktion.
Der Bauraum im Bereich des Radkastens ist sehr gut genutzt, und es lassen sich vergleichsweise niedrige Fahrzeugaufbauten (niedrige Wagenböden) verwirklichen. Aufgrund des komplizierten Aufbaus, verbunden mit hohen Entwicklungskosten, wurde bislang die bekannte Konstruktion
nur für Personenkraftwagen konzipiert, bei denen große
Stückzahlen eine wirtschaftliche Fertigung ermöglichten.

Aufgabe der Erfindung ist, die an sich bekannte Dämpferbeinachse weiteren Anwendungsgebieten zuzuführen und mit
Hilfe einfacher Mittel weiter zu verbessern.

Gelöst wird die der Erfindung zugrundeliegende Aufgabe
durch die im kennzeichnenden Teil des Anspruchs 1 angegebenen Merkmale. Vornehmlich wird erfindungsgemäß das
Anwendungsgebiet der Nutzfahrzeuge, insbesondere der
Omnibusse, erschlossen. Eine Anwendung bei Nutzfahrzeugen standen bisher Preis- und Fertigungsgründe im
Wege. Die bei Nutzfahrzeugen vorhandenen, höheren Achslasten erfordern nämlich Bauteile mit entsprechend großen Abmessungen, die bis heute noch von keinem Hersteller angeboten werden. Funktionstüchtige Radfedern und Dämpferelemente größerer Beanspruchung wurden bislang für die vergleichsweise geringen Stückzahlen im Nutzfahrzeugbau für zu entwicklungsintensiv und insgesamt zu teuer in der Herstellung angesehen. Die erfindungsgemäße Lösung räumt die fertigungsbedingten und wirtschaftlichen Gründe, an denen sich der Fachmann bislang orientiert hat, aus dem Weg und schafft die Grundlage für die Anwendung von Dämpferbeinachsen insbesondere im schweren Nutzfahrzeugbau schlechthin und bringt einige entscheidende technische Verbesserungen.

Insbesondere wird als Radfeder im Nutzfahrzeugbau ein Luftfederbalg vorgesehen, der bei vergleichsweise großem Wirkvolumen günstig in vergleichsweise kleinen Radkästen untergebracht werden kann. Als Führungslenker dienen vornehmlich Dreieckslenker, die quer zur Fahrtrichtung schwenkbar an der Fahrzeugunterseite befestigt sind. Die Abstützung des Federelements auf dem Dreieckslenker anstatt am Dämpferbein bedingt eine Reduzierung der Reibkräfte im Dämpferbein und eine optimale Nutzung des Bauraums im Bereich des Radkastens. Dadurch kann beispielsweise bei Stadtbussen der Fahrgastraum mit extrem niedrigem Wagenboden und breitem Mittelgang im Vorderachsbereich gestaltet werden, da alle Führungs- und Federungselemente innerhalb einer minimalen, allein durch den Radeinschlag bedingten Radkastenkontur untergebracht werden können.

Eine entscheidende Verbesserung gegenüber bekannten Dämpferbeinachsen sieht vor, daß die größeren Dämpfungskräfte von Nutzfahrzeugen nicht von einem einzigen Dämpferbein, sondern von zumindest zwei Dämpferbeinen aufgenommen werden, die parallel zueinander angeordnet sind und ein gemeinsames oberes Einspannstück sowie ein gemeinsames unteres Einspannstück besitzen. Die Parallelanordnung sorgt für einen kompakten Gesamtaufbau einer Dämpferbeinachse mit geringen Radkastenhöhen, wodurch sich extrem niedrige Wagenböden insbesondere bei Omnibussen einrichten lassen. Gleichwohl sind große Dämpfungskräfte vorhanden. Besonders durch die Aufteilung der Radführungskräfte auf zwei oder mehr Dämpferbeine pro Rad ist die Darstellung schwerer Nutzfahrzeugachsen mit heute gängigen und mit vertretbarem Aufwand herstellbaren Dämpferbeinen möglich geworden.

Eine besonders einfache fertigungsgünstige Anordnung ergibt sich, wenn insbesondere zwei im wesentlichen gleich ausgebildete Dämpferbeine vorgesehen und in Zwillingsbauweise angeordnet sind. Durch Verwendung gleich großer Dämpferbeine für leichte und schwere Achsen ergeben sich lohnenswerte Stückzahlen, wodurch die Stückkosten, der Entwicklungsaufwand und das Entwicklungsrisiko reduziert werden.

Eine andere vorteilhafte Weiterbildung der Erfindung kennzeichnet sich durch mehrere Dämpferbeine, die unterschiedlich groß dimensioniert sind und unterschiedliche Dämpfungseigenschaften besitzen.

Durch geschickte Kombination gleicher oder unterschiedlich großer Elemente (oder durch Verwendung von nur einem Dämpferelement pro Rad) kann mit wenigen Dämpfervarianten eine komplette Baureihe von Vorderachsen dargestellt werden, und zwar für alle Gewichtsklassen von Nutzfahrzeugen.

Durch die Anordnung mehrerer Elemente pro Rad ergeben sich:

- größere Sicherheit gegen Versagen,

- besser reproduzierbare Dämpfereigenschaften wegen geringerer Streuung,

- bessere Wärmeableitung aufgrund der größeren Oberfläche von zwei kleinen Dämpfern (gegenüber einem großen),

- leichtere Austauschbarkeit, da das Fahrzeug nicht hochgebockt werden muß,

- gute Notlaufeigenschaften bei Ausfall eines Dämpfers, und

- näherer Einbau zum Rad hin und damit kleinerer Lenkrollhalbmesser gegenüber einem dicken Dämpfer.

Die Erfindung wird nachfolgend anhand von Ausführungsbeispielen unter Bezugnahme auf die Zeichnung näher erläutert; es zeigen:

Fig. 1    eine Dämpferbeinachse für Nutzfahrzeuge mit einem einzigen Dämpferbein,

Fig. 2    eine der Fig. 1 ähnliche Darstellung einer Dämpferbeinachse mit zwei gleich ausgebildeten Dämpferbeinen in einer Zwillingsanordnung,

Fig. 3    die Ausführungsform nach Fig. 2 in schematischer Seitenansicht, und

Fig. 4    die Ausführungsform nach den Fig. 2 und 3 in schematischer Draufsicht bei Darstellung der gesamten Achse.

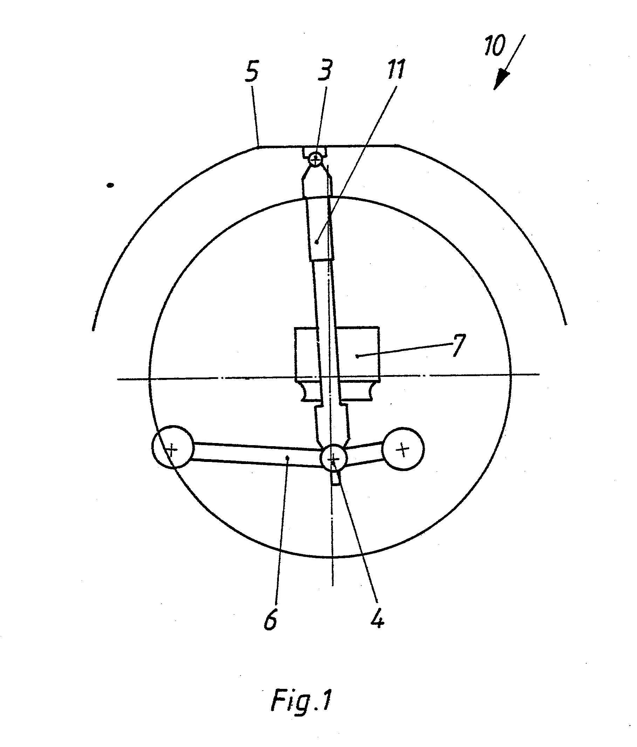

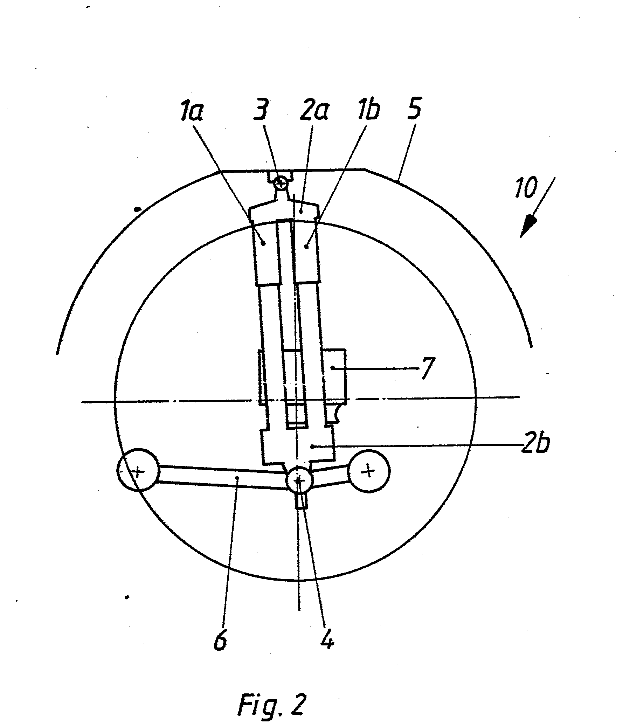

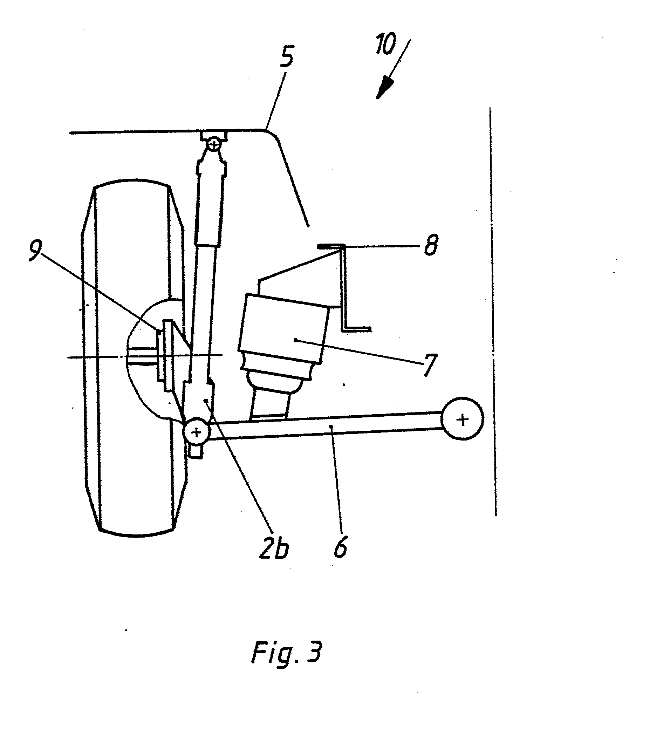

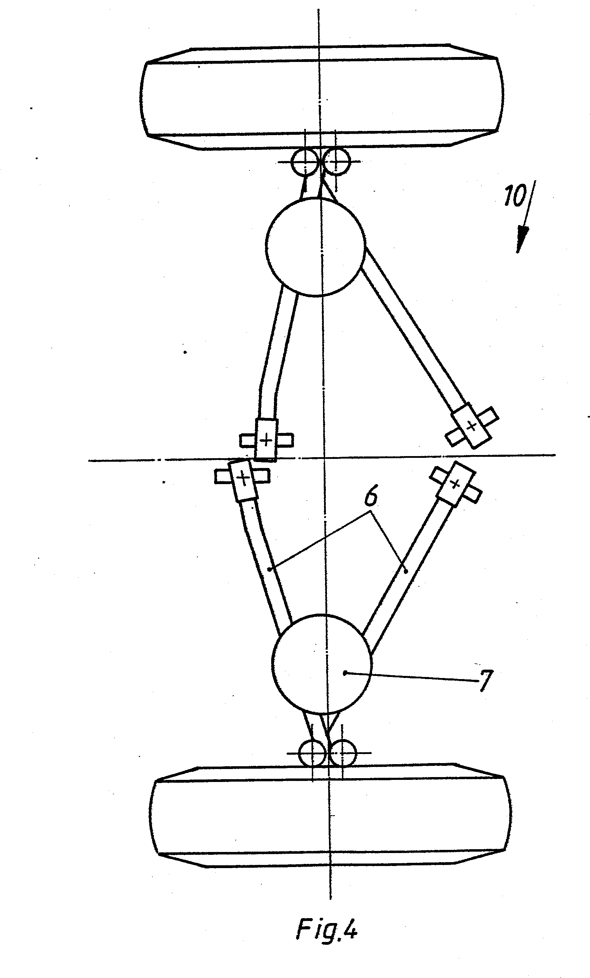

In Fig. 1 ist eine Dämpferbeinachse 10 für Nutzfahrzeuge in schematischer Stirnansicht im wesentlichen längs der Radachse gezeigt. Die Anordnung umfaßt ein einziges Dämpferbein 11 für ein aufzuhängendes Nutzfahrzeugrad. Der restliche Aufbau entspricht im wesentlichen dem nachfolgend beschriebenen Ausführungsbeispiel nach den Fig. 2 bis 4.

- 7 -

P a t e n t a n s p r ü c h e

1. Dämpferbeinachse für Kraftfahrzeuge, mit einem unteren,
schwenkbar am Fahrzeugaufbau angebrachten Führungslenker,
einem zwischen Führungslenker und Fahrzeugaufbau angeordneten, im Bereich seines oberen Endes gelenkig mit diesem
verbundenen Dämpferbein, einer vom Dämpferbein unabhängigen, zwischen Führungslenker und Fahrzeugaufbau angeordneten Radfeder sowie mit einem mit dem Dämpferbein fest verbundenen Radträger, bei der für das Rad mit Radträger
eine Lenkachse vorgesehen ist, die durch die obere gelenkige Anlenkung des Dämpferbeins und ein Radträger und
Dämpferbein mit dem Führungslenker verbindendes kugelgelenkartiges Radgelenk bestimmt ist, das wesentlich
unterhalb der Radachse liegt, g e k e n n z e i c h -
n e t durch Verwendung der Dämpferbeinachse (10) bei
leichten und schweren Nutzfahrzeugen, insbesondere Omnibussen.

2. Dämpferbeinachse nach Anspruch 1, dadurch g e k e n n -
z e i c h n e t , daß als Radfeder ein Luftfederbalg (7)
vorgesehen ist.

3. Dämpferbeinachse nach Anspruch 1 oder 2, dadurch g e -
k e n n z e i c h n e t , daß als Führungslenker ein
Dreieckslenker (6) vorgesehen ist.

4. Dämpferbeinachse für Kraftfahrzeuge, mit einem unteren,
schwenkbar am Fahrzeugaufbau angebrachten Führungslenker,
einem zwischen Führungslenker und Fahrzeugaufbau angeordneten, im Bereich seines oberen Endes gelenkig mit diesem
verbundenen Dämpferbein, einer vom Dämpferbein unabhängigen,
zwischen Führungslenker und Fahrzeugaufbau angeordneten

In den Fig. 2 bis 4 ist eine Dämpferbeinachse 10 mit zwei Dämpferbeinen 1a, 1b pro Rad in drei Ansichten dargestellt. Die Dämpferbeine 1a und 1b sind über ein oberes Einspannstück 2a an ihren Kolbenstangen und über ein unteres Einspannstück 2b an ihren Außenrohren starr verbunden. Sie bilden eine Einheit von zwei parallel geschalteten Dämpferbeinen, auf die sich die Radführungskräfte aufteilen und deren Dämpferkräfte sich addieren.

Die Einspannstücke 2a und 2b sind über Kugelgelenke 3 und 4 mit dem Radkasten 5 und dem Dreieckslenker 6 verbunden. Die Verbindungslinie der Kugelgelenke 3,4 bildet die Lenkachse und bestimmt somit die Radgeometrie.

Es ist ein Luftfederbalg 7 vorgesehen, der sich auf dem Dreieckslenker 6 und dem Fahrzeugaufbau bzw. Fahrzeugrahmen 8 abstützt.

Der eigentliche Radträger 9 ist starr mit dem unteren Einspannstück 2b verbunden.

Radfeder sowie mit einem mit dem Dämpferbein fest verbundenen Radträger, bei der für das Rad mit Radträger eine Lenkachse vorgesehen ist, die durch die obere gelenkige Anlenkung des Dämpferbeins und ein Radträger und Dämpferbein
mit dem Führungslenker verbindendes kugelgelenkartiges
Radgelenk bestimmt ist, das wesentlich unterhalb der Radachse liegt, g e k e n n z e i c h n e t   durch zumindest zwei·Dämpferbeine (1a,1b) in einer Parallelanordnung
mit einem gemeinsamen oberen Einspannstück (2a) und einem
gemeinsamen unteren Einspannstück (2b).

5. Dämpferbeinachse nach Anspruch 4, dadurch g e k e n n -
z e i c h n e t ,   daß unterschiedlich dimensionierte
Dämpferbeine mit unterschiedlicher Dämpfungscharakteristik
vorgesehen sind.

6. Dämpferbeinachse nach Anspruch 4 oder 5, dadurch g e -
k e n n z e i c h n e t ,   daß im wesentlichen zwei gleich
ausgebildete Dämpferbeine (1a,1b) vorgesehen und in Zwillingsbauweise angeordnet sind.

7. Dämpferbeinachse nach Anspruch 6, dadurch g e k e n n -
z e i c h n e t ,   daß beide Dämpferbeine (1a,1b) symmetrisch zur Lenkachse in unmittelbarer Nachbarschaft zu
dieser angeordnet sind.

8. Dämpferbeinachse nach den Ansprüchen 4 bis 7, g e k e n n -
z e i c h n e t   durch Verwendung der Dämpferbeinachse
(10) bei leichten und schweren Nutzfahrzeugen, insbesondere Omnibussen.

---------

Fig.1

MD 3/83

0128303

Fig. 2

Fig. 3

10/

6

7

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,D | DE-A-3 012 873 (DAIMLER-BENZ AG) * Anspruch 1; Seite 4, Zeile 29 - Seite 5, Zeile 2; Figur * | 1,3 | B 60 G 13/00 |
| Y | * Anspruch 1 * | 4,8 | |
| | --- | | |
| Y | DE-C- 410 905 (R. LIEBAU) * Seite 2, Zeilen 4-20; Figuren 3, 4 * | 4,8 | |
| | --- | | |
| X | DE-B-1 224 166 (USTAV PRO VYZKUM MOTOROVYCH VOZIDEL) * Ansprüche 1, 2; Figuren 1, 2 * | 1,2 | |
| | --- | | **RECHERCHIERTE SACHGEBIETE (Int. Cl. 3)** |
| A | US-A-2 935 334 (J.J. FELTS) | | |
| | ----- | | B 60 G 3/00 B 60 G 13/00 B 60 G 15/00 |

*Der vorliegende Recherchenbericht wurde für alle Patentansprüche erstellt.*

| Recherchenort BERLIN | Abschlußdatum der Recherche 27-07-1984 | Prüfer PETTI P |
|---|---|---|